# EUROPÄISCHE PATENTSCHRIFT

(11) **EP 0 317 593 B1**
(45) Veröffentlichungstag und Bekanntmachung des Hinweises auf die Patenterteilung: **27.01.1993**
(21) Anmeldenummer: 88904533.2
(22) Anmeldetag: 26.05.1988
(51) Int. Cl.: B01D 53/34, B60H 3/06, A62B 23/00

(54) **VERFAHREN, FILTER UND VORRICHTUNG ZUR BEREITSTELLUNG VON ATEMLUFT MIT HOHER LUFTGÜTE**
PROCESS, FILTER AND DEVICE FOR SUPPLYING HIGH-QUALITY BREATHING AIR
PROCEDE, FILTRE ET DISPOSITIF D'APPROVISIONNEMENT EN AIR INHALE DE QUALITE AMELIOREE

(30) Priorität: 27.05.1987 DE 3718021; 06.06.1987 DE 3719067; 21.07.1987 DE 3724050; 25.07.1987 DE 3724671; 12.08.1987 DE 3726762; 26.08.1987 DE 3728423; 15.09.1987 DE 3730922
(43) Veröffentlichungstag der Anmeldung: 31.05.1989
(73) Patentinhaber: Hölter, Heinz, Dipl.-Ing., D-45964 Gladbeck (DE)
(72) Erfinder: IGELBÜSCHER, Heinrich, D-4390 Gladbeck (DE); GRESCH, Heinrich, D-4600 Dortmund-Wickede (DE); HöLTER, Heinz, D-4390 GLADBECK (DE)
(74) Vertreter: Spalthoff, Adolf, Dipl.-Ing.
(86) Internationale Anmeldenummer: EP8800469
(87) Internationale Veröffentlichungsnummer: WO8809205

(56) Entgegenhaltungen:
- DE-A- 2 908 085
- DE-A- 2 911 428
- GB-A- 2 034 598

## Beschreibung

Die Erfindung bezieht sich auf einen Filter zur Beseitigung von Bakterien, Viren, Pilzen, Sporen, Keimen, Allergenen, Schad- und/oder Geruchsstoffen aus einem Luftstrom mit voneinander getrennten einzelnen Chemisorptionsfilterschichten.

Es hat sich herausgestellt, daß derartige Filter bei einem längeren Betriebseinsatz unter bestimmten Umständen Pilze, Sporen und/oder Bakterien freisetzen, die zu einer Verunreinigung des im Filter behandelten Luftstroms führen.

Der Erfindung liegt die Aufgabe zugrunde, den gattungsgemäßen Filter derart weiterzubilden, daß bei Aufrechterhaltung seiner Filterfunktionen auf Dauer keine Freisetzung von Pilzen, Sporen und/oder Bakterien auftritt.

Diese Aufgabe wird erfindungsgemäß dadurch gelöst, daß der Filter zumindest eine alkalische Chemisorptionsfilterschicht und zumindest eine saure Chemisorptionsfilterschicht enthält, wobei in Richtung des Luftstroms gesehen eine alkalische auf eine saure Chemisorptionsfilterschicht folgt oder umgekehrt. Es hat sich nämlich herausgestellt, daß eine solche alternierend alkalisch/saure Schichtenanordnung zu besonders guten Ergebnissen führt, was hinsichtlich Batterien, Keimen, Pilzen, Sporen etc. darauf zurückzuführen ist, daß einige der vorgenannten Stoffe zwar sowohl start alkalische als auch start saure Milieus gut überstehen können, jedoch durch die Wechselwirtung sauer/alkalisch zuverlässig abgetötet werden können. Ein wie vorstehend geschildert aufgebauter Filter kann insbesondere einem Biofilter nachgeschaltet werden, wobei aus dem Biofilter stammende Batterien, Pilze, Keime und/oder Sporen in den Chemisorptionsfilterschichten zurückgehalten und abgetötet werden.

Vorteilhaft läßt sich jede alkalische Chemisorptionsfilterschicht aus einer mit Natronlauge, Kalilauge, Natriumcarbonatlösung, Kaliumcarbonatlösung und/oder Natron-Kalt-Lösung getränkten Trägerschicht und jede saure Chemisorptionsfilterschicht aus einer mit Schwefelsäure auf einen pH-Wert zwischen 0,5 und 1,0 eingestellten Fe(II)-, Fe(III)- oder Fe(II/Fe(III)-Salzlösung getränkten Trägerschicht ausbilden. Die alkalische Chemisorptionsfilterschicht kann einen pH-Wert von ca. 12,8 aufweisen.

Die Trägerschichten können aus Steinkohlenkoks der Brechkokssorten III oder IV oder als Filzschichten ausgebildet werden. Für Filzschichten finden feuchtigkeitsaufnehmende Matten Anwendung, die dann mit den alkalischen, sauren oder auch neutralen Tränkflüssigkeiten behandelt und danach getrocknet werden. Die so hergestellten Matten werden dann in den Filter eingebaut bzw. zu dem Filter zusammengestellt.

Wenn zwischen den sauren und den alkalischen Chemisorptionsfilterschichten Trennschichten aus einem hydrophoben Wertstoff angeordnet sind, d.h. wenn zwischen den Chemisorptionsfilterschichten Zwischenlagen aus hydrophoben Vliesen eingebaut sind, wird erreicht, daß keine Feuchtigkeitsaufnahme im Filter erfolgt und somit keine Kontakte zwischen alkalischen und sauren und ggf. auch neutralen Chemisorptionsfilterschichten stattfinden, so daß, insbesondere hinsichtlich der sauren und alkalischen Chemisorptionsfilterschichten, keine Neutralisationsübergänge entstehen können.

In vielen Anwendungsfällen hat es sich als vorteilhaft erwiesen, wenn die Austrittschicht des Filters als neutralie Chemisorptionsfilterschicht ausgebildet ist. Hierbei kann es sich um eine Aktiv-Kohle-Schicht aus Steinkohlenkoks der Brechkokssorten III oder IV handeln.

Bei Anwendungen im Zusammenhang mit an Allergien leidenden Menschen kann es zweckdienlich sein, die Austrittsschicht des Filters statt als neutrale Chemisorptionsfilterschicht als alkalische oder - je nach Art der Allergie - saure Chemisorptionsfilterschicht auszubilden, wobei dann Carbonate und/oder Fe(II)-haltige saure Stoffe zur Anwendung kommen.

In bestimmten Einsatzgebieten kann es erforderlich sein, eine oder alle Chemisorptionsfilterschichten mit einem chemisch neutralen und geruchsfreien Antigefrierlösungsmittel gegen Frost etc. zu schützen.

Zur Verbesserung der geruchsbeseitigenden Eigenschaften des Filters dient eine Behandlung der im Filter vorgesehenen Aktiv-Kohle-Schicht mit Propylen-Glykol, welches an die Oberflächen der Aktiv-Kohle-Partikel angelagert wird. Diese Anlagerung wird vorteilhaft durch Aufdampfen erreicht. Die mit Propylen-Glykol behandelte Aktiv-Kohle-Schicht kann an der Eingangsseite des Filters angeordnet und ihr eine unbehandelte Aktiv-Kohle-Schicht nachgesetzt werden. Sofern das Propylen-Glykol, welches in der an der Eingangsseite des Filters angeordneten Aktiv-Kohle-Schicht vorhanden ist, verdampft, wird es in der unbehandelten Aktiv-Kohle-Schicht aufgenommen, wo es erneut zur besseren Aktivierung der Aktivkohle beiträgt.

Seine höchste biologische Wirksamteit entfaltet der Filter, wenn der pH-Wert der sauren Chemisorptionsfilterschichten unter 1 und der pH-Wert der alkalischen Chemisorptionsfilterschichten über 13 liegt.

Wenn eine oder mehrere Chemisorptionsfilterschichten alkalische Stoffe, erdalkalische Stoffe und Eisensalzverbindungen enthalten, kann der Filter, insbesondere dessen kokshaltige Bestandteile, als Brennstoff für eine Müllverbrennungsanlage eingesetzt werden, wobei die alkalischen Stoffe, erdalkalischen Stoffe und Eisensalzverbindungen nutzbar sind, um die bei der Verbrennung in der Müllverbrennungsanlage entstehenden Schadstoffe einzubinden. Derart gestaltete Filter können demgemäß einerseits Schadstoffe binden, ohne daß bei der Vernichtung derartiger Filter Schadstoffe freigesetzt würden. Die alkalischen Stoffe, erdalkalischen Stoffe und Eisensalzverbindungen wirten bei der Verbrennung katalytisch NOx-mindernd.

Vorteilhaft kann der Filter auch in der Belüftungseinrichtung eines Kraftfahrzeugs eingesetzt werden. Hier werden diese Filter so ausgelegt, daß sie außer für die Staubabscheidung insbesondere auch zur Einbindung saurer Schadstoffe, z.B. SO2, HCl, HF, HC-Verbindungen und NOx, und von CO-Belastungen tauglich sind. Durch den Zusatz von Glyzerin in eine oder mehrere der zum Filter gehörenden Chemisorptionsschichten kann der Filter gegen Frost geschützt werden. Derartige Filter können ausreichend dünn ausgestaltet werden, um den im PKW-Bereich herrschenden beengten Raumverhältnissen zu genügen. Die Chemisorptionsfilterschichten sind demgemäß entsprechend dünn und bewirten so einen vergleichsweise geringen Druckabfall. Eine oder mehrere der Chemisorptionsschichten des Filters können ein geruchsneutrales Lösungsmittel enthalten, so daß auch bei Nebel und negativen Temperaturen der Filter weiterhin betriebsfähig bleibt.

Des weiteren kann der Filter bei einer Luftbefeuchtungseinrichtung eingesetzt werden, wobei sowohl an der Einlaß- als auch an der Auslaßseite der Luftbefeuchtungseinrichtung ein derartiger Filter angeordnet ist und wobei die Auslaßseite der Luftbefeuchtungseinrichtung bei deren Außerbetriebsetzung mittels des bewegbar angeordneten auslaßseitigen Filters verschlossen wird. Hierdurch wird verhindert, daß die Luftbefeuchtungseinrichtung verkeimt; durch die Filter wird verhindert, daß bei Außerbetriebsetzung der Luftbefeuchtungseinrichtung keim- und allergenbelastete Raumluft in die Luftbefeuchtungseinrichtung hineindiffundiert, wodurch Keime und Allergene auf dem Verdunstungsteil der Luftbefeuchtungseinrichtung ansiedeln, diese verkeimen und sich dort vermehren könnten, wobei nach der Wiederinbetriebsetzung der Luftbefeuchtungseinrichtung die genannten Stoffe dann an die Raumluft abgegeben werden und diese zusätzlich belasten könnten.

Eine besonders zweckmäßige Anwendung findet der Filter auf der Saug- und/oder der Druckseite des Drucklufterzeugers einer Druckluftanlage eines Krankenhauses. Hierdurch werden die in der Krankenhausluft in erhöhtem Ausmaß vorhandenen Schadstoffe neutralisiert. Die von Beatmungsgeräten für Patienten zur Verfügung gestellte Atemluft kann so vollständig von Schadstoffen befreit werden.

Grundsätzlich können derartige Filter auch zur Reinhaltung von Wohnräumen verwendet werden.

Im folgenden wird die Erfindung an Hand eines Ausführungsbeispiels unter Bezugnahme auf die Zeichnung näher erläutert.

Es zeigen:
Abb. 1 eine Luftbefeuchtungseinrichtung mit dem erfindungsgemäßen Filter in einer ersten Ausführungsform; und
Abb. 2 eine Luftbefeuchtungseinrichtung mit dem erfindungsgemäßen Filter in einer zweiten Ausführungsform.

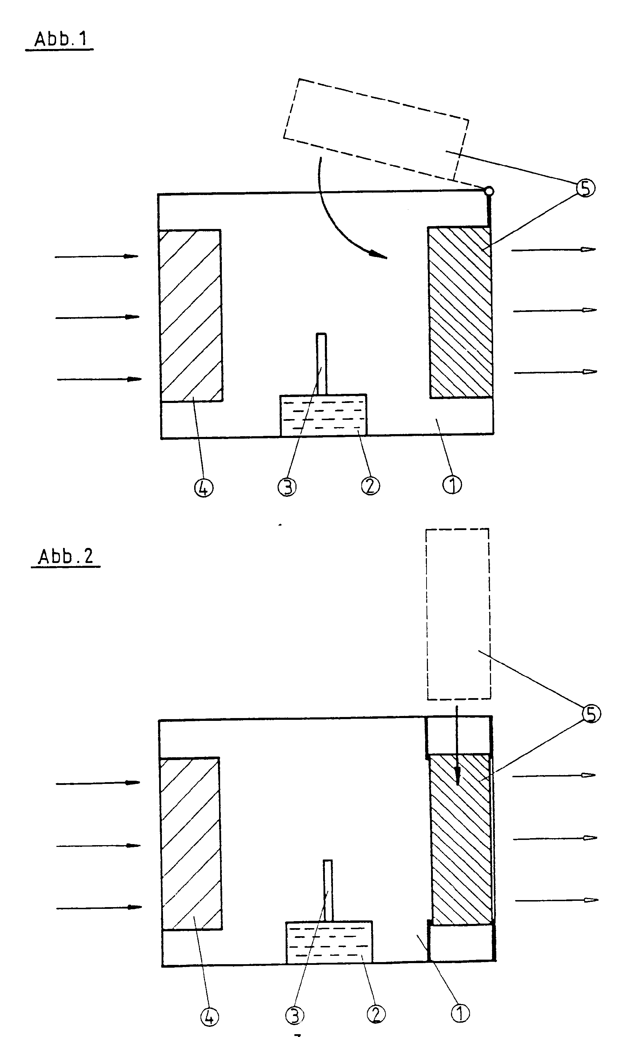

Eine Luftbefeuchtungseinrichtung 1 hat einen Wasservorratsbehälter 2 und einen Docht 3. Im Anströmbereich der Luftbefeuchtungseinrichtung 1 ist ein erster bakterizider Filter 4 angeordnet. Im Abströmbereich der Luftbefeuchtungseinrichtung 1 ist ebenfalls ein bakterizider Filter 5 angeordnet. Bei der Ausführungsform gemäß Abb. 1 ist der bakterizide Filter 5 aus der Abströmfläche der Luftbefeuchtungseinrichtung 1 abschwenkbar, bei der in Abb. 2 dargestellten Ausführungsform der Luftbefeuchtungseinrichtung 1 ist der bakterizide Filter 5 aus der Abströmfläche herausschiebbar.

Wenn die Luftbefeuchtungseinrichtung 1 in Betrieb ist, ist der bakterizide Filter 5 in die gestrichelt dargestellte Position ausgeschwenkt bzw. hochgeschoben.

Beim Ausschalten der Luftbefeuchtungseinrichtung 1 wird der bakterizide Filter 5 in die Abströmfläche der Luftbefeuchtungseinrichtung 1 zurückgeschwenkt bzw. heruntergeschoben, so daß bei Nichtbetrieb der Luftbefeuchtungseinrichtung der Wasservorratsbehälter 2 und der Docht 3 gegen das Eindringen von mit Keimen belasteter Umgebungsluft gesichert sind.

Es ist möglich, das Hinunterschieben bzw. das Zurückschwenten des bakteriziden Filters 5 durch eine geeignete Sensorik zwangszusteuern.

## Patentansprüche

1. Filter zur Beseitigung von Bakterien, Viren, Pilzen, Sporen, Keimen, Allergenen, Schad- und/oder Geruchsstoffen aus einem Luftstrom, mit voneinander getrennten einzelnen Chemisorptionsfilterschichten, dadurch gekennzeichnet, daß der Filter zumindest eine alkalische Chemisorptionsfilterschicht und zumindest eine saure Chemisorptionsfilterschicht enthält, wobei in Richtung des Luftstroms gesehen eine alkalische auf eine saure Chemisorptionsfilterschicht folgt oder umgekehrt.

2. Filter nach Anspruch 1, bei dem jede alkalische Chemisorptionsfilterschicht aus einer mit Natronlauge, Kalilauge, Natriumcarbonatlösung, Kaliumcarbonatlösung und/oder Natronkalklösung getränkten Trägerschicht und jede saure Chemisorptionsfilterschicht aus einer mit Schwefelsäure auf einen pH-Wert zwischen 0,5 und 1,0 eingestellten Fe(II)-, Fe(III)- oder Fe(II)/Fe(III)-Salzlösung getränkten Trägerschicht besteht.

3. Filter nach Anspruch 1 oder 2, bei dem die Chemisorptionsfilterschichten stromab eines biologischen Filters angeordnet sind.

4. Filter nach Anspruch 2 oder 3, bei dem die Trägerschichten aus Steinkohlenkoks der Brechkokssorten III oder IV oder als Filzschichten ausgebildet sind.

5. Filter nach einem der Ansprüche 1 - 4, bei dem zwischen den sauren und den alkalischen Chemisorptionsfilterschichten Trennschichten aus einem hydrophoben Werkstoff angeordnet sind.

6. Filter nach einem der Ansprüche 1 - 5, bei dem zumindest eine neutrale Chemisorptionsfilterschicht vorgesehen ist.

7. Filter nach Anspruch 6, bei dem die neutrale Chemisorptionsfilterschicht eine Aktivkohleschicht ist.

8. Filter nach Anspruch 7, bei dem anstelle der Aktivkohleschicht eine alkalische oder eine saure Chemisorptionsfilterschicht die ausgangsseitige Chemisorptionsfilterschicht des Filters bildet.

9. Filter nach einem der Ansprüche 1 - 8, bei dem zumindest eine Chemisorptionsfilterschicht auch mit einem chemisch neutralen und geruchsfreien Antigefrierlösungsmittel getränkt ist.

10. Filter nach einem der Ansprüche 7 - 9, bei dem die Aktivkohleschicht mit Propylen-Glykol behandelt ist.

11. Filter nach Anspruch 10, bei dem die mit Propylen-Glykol behandelte Aktivkohleschicht an der Eingangsseite des Filters angeordnet und ihr eine unbehandelte Aktivkohleschicht nachgesetzt ist.

12. Filter nach einem der Ansprüche 1 - 11, bei dem der pH-Wert der sauren Chemisorptionsfilterschichten unter 1 und der pH-Wert der alkalischen Chemisorptionsfilterschichten über 13 liegt.

13. Filter nach einem der Ansprüche 1 - 12, bei dem die Chemisorptionsfilterschichten alkalische Stoffe, erdalkalische Stoffe und Eisensalzverbindungen enthalten.

14. Verwendung eines Filters nach einem der Ansprüche 1 - 13 in der Belüftungseinrichtung eines Kraftfahrzeugs.

15. Verwendung eines Filters nach einem der Ansprüche 1 - 13 bei einer Luftbefeuchtungseinrichtung, wobei sowohl an der Einlaß- als auch an der Auslaßseite der Luftbefeuchtungseinrichtung ein derartiger Filter angeordnet ist und wobei die Auslaßseite der Luftbefeuchtungseinrichtung bei deren Außerbetriebsetzung mittels des bewegbar angeordneten auslaßseitigen Filters verschlossen wird.

16. Verwendung eines Filters nach einem der Ansprüche 1 - 13 auf der Saug- und/oder der Druckseite eines Drucklufterzeugers einer Druckluftanlage eines Krankenhauses.

17. Verfahren zur Beseitigung von Bakterien, Viren, Pilzen, Sporen, Allergenen, Schad- und/oder Geruchsstoffen aus einem Luftstrom, bei dem der Luftstrom in einem Filter nach einem der Ansprüche 1 - 13 aufeinanderfolgend durch eine saure und eine alkalische Chemisorptionsfilterschicht oder umgekehrt bzw. durch eine Mehrzahl von alternierend angeordneten sauren und alkalischen Chemisorptionsfilterschichten geführt wird.

18. Verfahren nach Anspruch 17, bei dem der Filter nach Ablauf seiner Betriebszeit verbrannt wird, wobei die bei der thermischen Zersetzung freiwerdenden sauren Schadstoffe, wie SO2, HCl, HF, und Stickoxide durch alkalische Stoffe, erdalkalische Stoffe sowie Eisensalzverbindungen gebunden bzw. katalytisch reduziert werden.

## Claims

1. Filter with individual, separated chemisorption filter layers, for removing bacteria, viruses, fungi, spores, germs, allergens, contaminants and/or odorous substances from an airflow characterised in that the filter includes at least one alkaline chemisorption filter layer and at least one acid chemisorption filter layer wherein, viewed in the direction of the airflow, an alkaline chemisorption filter layer follows an acid chemisorption filter layer or vice versa.

2. Filter according to Claim 1, in which each alkaline chemisorption filter layer consists of a substrate impregnated with sodium hydroxide solution, potassium hydroxide solution, sodium carbonate solution, potassium carbonate solution and/or soda lime solution and each acid chemisorption filter layer consists of a substrate impregnated with an Fe(II)-, Fe(III)-, or Fe(II)/Fe(III)-salt solution which has been brought to a pH value of between 0.5 and 1.0 with sulphuric acid.

3. Filter according to Claim 1 or Claim 2, in which the chemisorption filter layers are disposed downstream of a biological filter.

4. Filter according to Claim 2 or Claim 3, in which the substrate layers are formed of hard-coal coke of the coke nuts III or IV type or are formed as felt layers.

5. Filter according to one of Claims 1-4, in which the separating layers between the acid and alkaline chemisorption filter layers are of a hydrophobic material.

6. Filter according to one of Claims 1-5, in which there is at least one neutral chemisorption filter layer.

7. Filter according to Claim 6, in which the neutral chemisorption filter layer is an activated carbon layer.

8. Filter according to Claim 7, in which the chemisorption filter layer on the output side of the filter is formed by an alkaline or an acid chemisorption filter layer instead of the activated carbon layer.

9. Filter according to any one of Claims 1-8, in which the chemisorption filter layer, of which there is at least one, is also soaked with a chemically neutral and odourless antifreeze solvent.

10. Filter according to any one of Claims 7-9 in which the activated carbon layer is treated with propylene glycol.

11. Filter according to Claim 10 in which the activated carbon layer treated with propylene glycol is disposed on the input side of the filter and an untreated activated carbon layer is disposed downstream thereof.

12. Filter according to any one of Claims 1-11, in which the pH value of the acid chemisorption filter layers is less than 1 and the pH value of the alkaline chemisorption filter layers is more than 13.

13. Filter according to any one of Claims 1-12, in which the chemisorption filter layers include alkaline substances, alkaline earths and iron salt compounds.

14. Use of a filter according to any one of Claims 1-13 in the ventilation system of a motor vehicle.

15. Use of a filter according to any one of Claims 1-13 in an air humidifier, wherein there is a filter of this type disposed both on the input side and on the output side of the air humidifier, and wherein, when the air humidifier is out of action, its output side is closed by means of the movably disposed output filter.

16. Use of a filter according to any one of Claims 1-13 on the suction and/or pressure side of a compressed-air generator of a hospital compressed-air plant.

17. Method of removing bacteria, viruses, fungi, spores, allergens, contaminants and/or odorous substances from an airflow, in which the airflow is guided successively through an acid and an alkaline chemisorption filter layer or vice versa, or through a plurality of alternating acid and alkaline chemisorption filter layers in a filter according to any one of Claims 1-13.

18. Method according to Claim 17 in which the filter is burnt after the expiry of its period of operation, wherein acid contaminants such as SO2, HCl, HF and nitrogen oxide which are released by thermal decomposition are combined with or catalytically reduced by alkaline substances, alkaline earths and iron salts.

## Revendications

1. Filtre pour éliminer des bactéries, des virus, des champignons, des spores, des germes, des allergènes, des polluants et/ou des produits odorants d'un courant d'air, comprenant des couches de filtre à chimisorption, individuelles, séparées les unes des autres, **caractérisé** en ce que le filtre comporte au moins une couche de filtre à chimisorption alcaline et au moins une couche de filtre à chimisorption acide, une couche de filtre à chimisorption alcaline suivant une couche de filtre à chimisorption acide ou inversement, les choses étant vues dans le sens d'écoulement du courant d'air.

2. Filtre selon la revendication 1, dans lequel chaque couche de filtre à chimisorption alcaline est constituée d'une couche support imprégnée de lessive de soude, de lessive de potasse, de solution de carbonate de sodium, de solution de carbonate de potassium et/ou de solution de chaux sodée, et chaque couche de filtre à chimisorption acide est constituée d'une couche support imprégnée d'une solution de sel de Fe(II), de Fe(III) ou de Fe(II)/Fe(III), dont le pH a été ajusté à une valeur comprise entre 0,5 et 1,0 par addition d'acide sulfurique.

3. Filtre selon la revendication 1 ou 2, dans lequel les couches de filtre à chimisorption sont disposées en aval d'un filtre biologique.

4. Filtre selon la revendication 2 ou 3, dans lequel les couches supports sont formées de coke de houille constitué de coke concassé et calibré de qualité III ou IV, ou de couches de feutre.

5. Filtre selon l'une des revendications 1 à 4, dans lequel des couches de séparation constituées d'un produit hydrophobe sont disposées entre les couches de filtre à chimisorption acides et les couches de filtre à chimisorption alcalines.

6. Filtre selon l'une des revendications 1 à 5, dans lequel est prévue au moins une couche de filtre à chimisorption neutre.

7. Filtre selon la revendication 6, dans lequel la couche de filtre à chimisorption neutre est une couche de charbon actif.

8. Filtre selon la revendication 7, dans lequel une couche de filtre à chimisorption alcaline ou acide forme, à la place de la couche de charbon actif, la couche de filtre à chimisorption du filtre, située côté sortie.

9. Filtre selon l'une des revendications 1 à 8, dans lequel au moins une couche de filtre à chimisorption est imprégnée aussi avec une solution d'antigel chimiquement neutre et inodore.

10. Filtre selon l'une des revendications 7 à 9, dans lequel la couche de charbon actif est traitée avec du propylène-glycol.

11. Filtre selon la revendication 10, dans lequel la couche de charbon actif, traitée avec du propylène-glycol, est disposée du côté entrée du filtre et une couche de charbon actif non traitée est placée après elle.

12. Filtre selon l'une des revendications 1 à 11, dans lequel le pH des couches de filtre à chimisorption acides est inférieur à 1 et le pH des couches de filtre à chimisorption alcalines est supérieur à 13.

13. Filtre selon l'une des revendications 1 à 12, dans lequel les couches de filtre à chimisorption renferment des produits alcalins, des produits alcalino-terreux et des sels de fer.

14. Utilisation d'un filtre selon l'une des revendications 1 à 13 dans le dispositif d'aération d'un véhicule automobile.

15. Utilisation d'un filtre selon l'une des revendications 1 à 13 dans un dispositif d'humidification de l'air, un tel filtre étant disposé aussi bien du côté admission que du côté sortie du dispositif d'humidification de l'air, et le côté sortie du dispositif d'humidification de l'air étant fermé, lors de la mise hors service du dispositif, au moyen du filtre situé côté sortie, disposé de manière mobile.

16. Utilisation d'un filtre selon l'une des revendications 1 à 13 sur le côté aspiration et/ou sur le côté refoulement d'un compresseur d'air d'une installation d'air comprimé d'un hôpital.

17. Procédé pour éliminer des bactéries, des virus, des champignons, des spores, des allergènes, des polluants et/ou des produits odorants d'un courant d'air, dans lequel on fait passer le courant d'air dans un filtre selon l'une des revendications 1 à 13, successivement à travers une couche de filtre à chimisorption acide et une couche de filtre à chimisorption alcaline, ou inversement, ou à travers plusieurs couches de filtre à chimisorption acides et alcalines, disposées alternativement.

18. Procédé selon la revendication 17, dans lequel le filtre est brûlé, une fois achevée sa durée d'utilisation, les polluants acides, tels que SO₂, HCl, HF, et les oxydes d'azote libérés lors de la décomposition thermique étant fixés ou réduits catalytiquement par des produits alcalins, des produits alcalino-terreux et des sels de fer.
